# EUROPEAN PATENT APPLICATION

(11) **EP 4 818 791 A1**
(43) Date of publication of application: **07.10.2026**
(21) Application number: 24897098.0
(22) Date of filing: 08.10.2024
(51) Int. Cl.: G02B 27/02

(54) **IMAGE PROJECTION DEVICE**

(30) Priority: 30.11.2023 JP 2023203315
(71) Applicant: QD Laser, Inc., Kawasaki-shi, Kanagawa 210-0855 (JP)
(72) Inventor: HORI, Yuuki, Kawasaki-shi, Kanagawa 210-0855 (JP); SUZUKI, Makoto, Kawasaki-shi, Kanagawa 210-0855 (JP)
(74) Representative: Becker Kurig & Partner Patentanwälte mbB
(86) International application number: PCT/JP2024/035897
(87) International publication number: WO 2025/115408

(57) **Abstract**

This image projection device 100 is provided with: a projection unit 10 including a light source 11, a scanning unit 13 that scans with a light beam 50 emitted from the light source 11, and a projection optical system 20 that projects an image onto a retina 61 by converging a plurality of light beams 50 emitted in different directions from the scanning unit 13 by the scanning of the scanning unit 13 to a convergent point 70 in an eye 60 of a user and thereafter projecting the converged plurality of light beams onto the retina 61; an imaging unit 40 that captures an image of the eye 60 of the user; a generation unit 34 that generates a superimposed image 82 obtained by superimposing a captured image 80 of the eye 60 of the user captured by the imaging unit 40 and a reference image 81 in which an initial position 83 to be aligned with a pupil 62 of the user is displayed; and a projection control unit 31 that controls the projection unit 10 to project the superimposed image 82 onto the retina 61.

## Description

### Technical Field

The present invention relates to an image projection device.

### Background Art

An image projection device utilizing Maxwellian view is known that directly projects an image onto the retina of a user using light beams emitted from a light source. In Maxwellian view, multiple light beams forming an image are converged within the eye of the user and then irradiated onto the retina, thereby projecting the image onto the retina. In the image projection device using Maxwellian view, an image is not projected onto the retina unless light beams pass through the pupil. Therefore, a method has been proposed to allow light beams to continue passing through the pupil even when the pupil moves (for example, Patent Document 1).

### Related Art Document

### Patent Document

Patent Document 1: Japanese Patent Application Laid-Open No. 2023-76137

### SUMMARY OF THE INVENTION

### Problem to be Solved by the Invention

When a user wears an image projection device, it is desirable for the pupil to be at a predetermined position corresponding to a convergent point where multiple light beams converge within the eye, but the pupil may deviate from this predetermined position. To align the position of the pupil with the predetermined position, for example, a possible method is to output a sound with volume corresponding to the amount of deviation from the predetermined position for guidance. However, it is difficult to adjust the position because the direction of deviation cannot be determined from the volume of the sound alone. An alternative method is to make an announcement with voice guide, but in this method, there may be a delay in the voice guide because the position of the pupil changes during the announcement.

The present invention has been made in view of the above problems, and aims to make it possible to easily align the position of the pupil with a predetermined position.

### Means for Solving the Problem

The present invention provides an image projection device, including: a projection unit including a scanning unit that scans with a light beam emitted from a light source, and a projection optical system that converges a plurality of the light beams emitted in different directions from the scanning unit by scanning of the scanning unit to a convergent point within an eye of a user and then projects converged light beams onto a retina to project an image onto the retina; an imaging unit capturing an image of the eye of the user; a generation unit generating a superimposed image obtained by superimposing a captured image of the eye of the user obtained by the imaging unit and a reference image displaying a position to be aligned with a pupil of the user; and a projection control unit controlling the projection unit to project the superimposed image onto the retina.

In the above configuration, the generation unit can generate a first guidance indicator that guides a center position of the pupil of the user and the position to match each other, based on the center position of the pupil of the user captured in the captured image and the position in the reference image, and the projection control unit can control the projection unit to project the first guidance indicator onto the retina.

In the above configuration, the first guidance indicator can be an arrow.

In the above configuration, the projection unit and the imaging unit can be attached to a frame worn by the user.

The above configuration can include an illumination light source that is attached to a frame worn by the user together with the projection unit and the imaging unit, and irradiates a plurality of illumination lights to the eye of the user, wherein the generation unit can generate a second guidance indicator that guides an interval between the plurality of illumination lights captured in the captured image to become a predetermined value, and the projection control unit can control the projection unit to project the second guidance indicator onto the retina.

In the above configuration, the second guidance indicator can be a color that changes according to the interval between the plurality of illumination lights.

In the above configuration, the illumination light source can irradiate the eye of the user with four illumination lights that respectively oppose each other in at least a first direction and a second direction orthogonal to the first direction as the plurality of illumination lights, and the generation unit can generate the second guidance indicator that guides an interval between two illumination lights opposing each other in the first direction and an interval between two illumination lights opposing each other in the second direction to become the predetermined value.

The above configuration can include an illumination light source that is attached to a frame worn by the user together with the projection unit and the imaging unit, and irradiates a plurality of illumination lights to the eye of the user, wherein the generation unit can generate the superimposed image that displays a position based on the plurality of illumination lights captured in the captured image and a center position of the pupil captured in the captured image.

In the above configuration, the illumination light source can irradiate the eye of the user with four illumination lights that respectively oppose each other in at least a first direction and a second direction orthogonal to the first direction as the plurality of illumination lights, and the generation unit can set an intersection point where a straight line passing through centers of two illumination lights opposing each other in the first direction and a straight line passing through centers of two illumination lights opposing each other in the second direction intersect, as a position based on the plurality of illumination lights.

### Effects of the Invention

According to the present invention, it is possible to easily align the position of the pupil with a predetermined position.

### BRIEF DESCRIPTION OF THE DRAWINGS

[FIG. 1] FIG. 1 is a diagram showing the image projection device according to Example 1.
[FIG. 2] FIG. 2 is a perspective view showing a configuration in which the housing incorporating the projection unit and the imaging unit in Example 1 is attached to an eyeglass-type frame.
[FIG. 3] FIG. 3(a) to FIG. 3(c) are diagrams showing the captured image, the reference image, and the superimposed image in Example 1.
[FIG. 4] FIG. 4(a) to FIG. 4(c) are diagrams showing light beams until the light beams are irradiated onto the retina in Example 1.
[FIG. 5] FIG. 5 is a diagram showing an example of the method of acquiring the reference image in Example 1.
[FIG. 6] FIG. 6 is a flowchart showing an example of control of the control unit in Example 1.
[FIG. 7] FIG. 7(a) and FIG. 7(b) are diagrams showing an example of the projected image in Example 1.
[FIG. 8] FIG. 8(a) is a diagram showing the image projection device according to Example 2, and FIG. 8(b) is a diagram showing irradiation of an illumination light emitted by the illumination light source onto the cornea.
[FIG. 9] FIG. 9(a) to FIG. 9(e) are diagrams showing the relationship between the interval between the illumination light source and the cornea in Example 2, and the illumination light captured in the captured image taken by the imaging unit.
[FIG. 10] FIG. 10(a) and FIG. 10(b) are diagrams illustrating a case where the line-of-sight direction of the eye is tilted with respect to the optical axis of the imaging unit in Example 2.
[FIG. 11] FIG. 11(a) to FIG. 11(c) are diagrams showing an example of the superimposed image and the second guidance indicator generated by the generation unit in Example 2.
[FIG. 12] FIG. 12 is a flowchart showing an example of control of the control unit in Example 2.

### DESCRIPTION OF THE EMBODIMENTS

Hereinafter, examples of the present invention will be described with reference to the drawings.

### Example 1

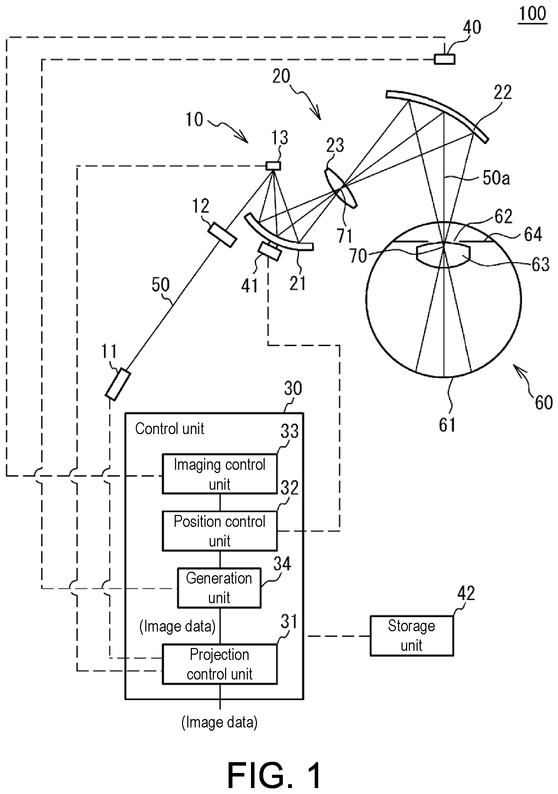

FIG. 1 is a diagram showing an image projection device 100 according to Example 1. The broken lines in FIG. 1 indicate electrical connections. The image projection device 100 according to Example 1 is a retinal projection type head-mounted display utilizing Maxwellian view, in which light beams (laser lights) for a user to visually recognize an image are directly projected onto the retina of the user.

As shown in FIG. 1, the image projection device 100 according to Example 1 includes a projection unit 10, a control unit 30, an imaging unit 40, a drive unit 41, and a storage unit 42. The projection unit 10 includes a light source 11, a lens 12, a scanning unit 13, and a projection optical system 20. The projection optical system 20 includes a reflection mirror 21, a projection mirror 22, and a lens 23. The control unit 30 includes a projection control unit 31, a position control unit 32, an imaging control unit 33, and a generation unit 34. The control unit 30 is a processor such as a CPU (Central Processing Unit). The projection control unit 31, the position control unit 32, the imaging control unit 33, and the generation unit 34 may function by the same processor or may function by different processors. The storage unit 42 is a non-volatile semiconductor memory such as a flash memory.

The light source 11 emits a light beam 50 (laser light) based on instructions from the projection control unit 31. The light source 11 emits, for example, light beams 50 that are visible lights of red laser light (wavelength: approximately 610 nm to 660 nm), green laser light (wavelength: approximately 515 nm to 540 nm), and blue laser light (wavelength: approximately 440 nm to 480 nm). Examples of the light source 11 that emits red, green, and blue laser lights include a light source in which laser diode chips respectively for RGB (red, green, blue) and a three-color combining device are integrated. The light source 11 may emit a light beam 50 of a single wavelength.

The projection control unit 31 receives image data from a camera and/or recording equipment (not shown). Further, the projection control unit 31 receives image data generated by the generation unit 34 from the generation unit 34. The projection control unit 31 controls emission of the light beam 50 from the light source 11 based on the input image data. The projection control unit 31 also controls the driving of the scanning unit 13. The scanning unit 13 scans with the light beam 50 at high speed from the upper left to the lower right of the image (for example, raster scan) based on instructions from the projection control unit 31. The projection control unit 31 controls the light source 11 and the scanning unit 13 to control projection of the light beam 50 onto a retina 61 of the user. By installing a camera at an appropriate position facing the line-of-sight direction of the user, an image in the line-of-sight direction captured by this camera can be projected onto the retina 61. Further, it is possible to project images input from recording equipment or the like, or to superimpose camera images and images from recording equipment or the like to project so-called augmented reality (AR) images.

The light beam 50 emitted by the light source 11 passes through the lens 12. The lens 12 is a focusing lens that converts the light beam 50 from diffused light to focused light. The light beam 50 that has passed through the lens 12 is incident on the scanning unit 13. The scanning unit 13 (scanner) scans with the light beam 50 in two-dimensional directions, that is, horizontal direction and vertical direction. The scanning unit 13 is, for example, a MEMS (Micro Electric Mechanical System) mirror. The scanning unit 13 may not be a MEMS mirror, and may be, for example, a scanner using potassium tantalate niobate (KTN) or the like.

Multiple light beams 50 with which the scanning unit 13 scans in two-dimensional directions and which are emitted from the scanning unit 13 in different directions at different times enter the projection optical system 20. The projection optical system 20 converges the multiple light beams 50 emitted from the scanning unit 13 to a convergent point 70 inside an eye 60 of the user and then projects the converged light beams onto the retina 61 to project an image onto the retina 61. For example, the multiple light beams 50 emitted from the scanning unit 13 are incident on the reflection mirror 21. The reflection mirror 21 is a concave mirror having a reflecting surface composed of a curved surface such as a free-form surface, and has positive focusing power. The multiple light beams 50 reflected by the reflection mirror 21 converge at a convergent point 71 in front of the projection mirror 22. The lens 23 is provided at the convergent point 71 between the projection mirror 22 and the reflection mirror 21. The lens 23 is, for example, a biconvex lens. The multiple light beams 50 pass through the lens 23 and are incident on the projection mirror 22. The projection mirror 22 is disposed in front of the eye 60 of the user. The projection mirror 22 reflects the multiple light beams 50 toward the eye 60 of the user. The projection mirror 22 is a concave mirror having a reflecting surface composed of a curved surface such as a free-form surface, and has positive focusing power. The multiple light beams 50 reflected by the projection mirror 22 pass through a pupil 62 of the user, converge at the convergent point 70 at or near a crystalline lens 63, and then are projected onto the retina 61. This allows the user to visually recognize the image formed by the light beams 50. The projection mirror 22 may be a half mirror. In this case, the user is able to see through the mirror and view an external world image.

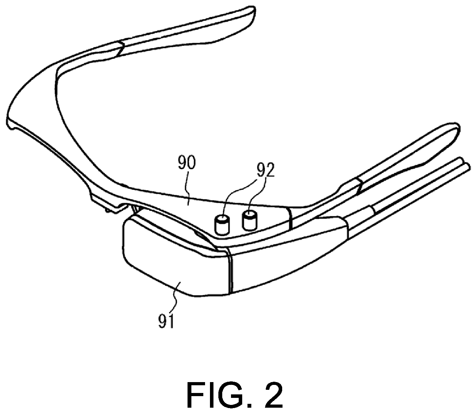

FIG. 2 is a perspective view showing a configuration in which a housing 91 incorporating the projection unit 10 and the imaging unit 40 in Example 1 is attached to an eyeglass-type frame 90. As shown in FIG. 2, the housing 91 incorporating the projection unit 10 and the imaging unit 40 is attached to the eyeglass-type frame 90 that is worn on the face of the user. The eyeglass-type frame 90 is provided with an adjustment unit 92 (for example, an adjustment knob) capable of adjusting the position of the housing 91.

As shown in FIG. 1, the imaging unit 40 is disposed in front of the eye 60 of the user and captures an image of the eye 60 of the user based on instructions from the imaging control unit 33. The imaging unit 40 is, for example, an infrared camera. Considering that the user may view an external world image in a see-through manner, the imaging unit 40 may be disposed at a position slightly shifted from the front of the eye 60 within a range that allows the imaging unit 40 to capture an image of the eye 60. For example, in the case where the projection unit 10 is attached to the eyeglass-type frame 90, the imaging unit 40 may be provided near the temple or near the nose pad of the eyeglass-type frame 90.

The generation unit 34 acquires an image of the eye 60 captured by the imaging unit 40 from the imaging unit 40, and generates a superimposed image obtained by superimposing the acquired captured image and a reference image stored in the storage unit 42. The reference image is an image displaying an initial position to be aligned with the center position of the pupil 62 when the user wears the eyeglass-type frame 90. Further, the generation unit 34 generates a first guidance indicator that guides the center position of the pupil 62 and the initial position to match each other, based on the center position of the pupil 62 captured in the captured image of the eye 60 and the initial position in the reference image.

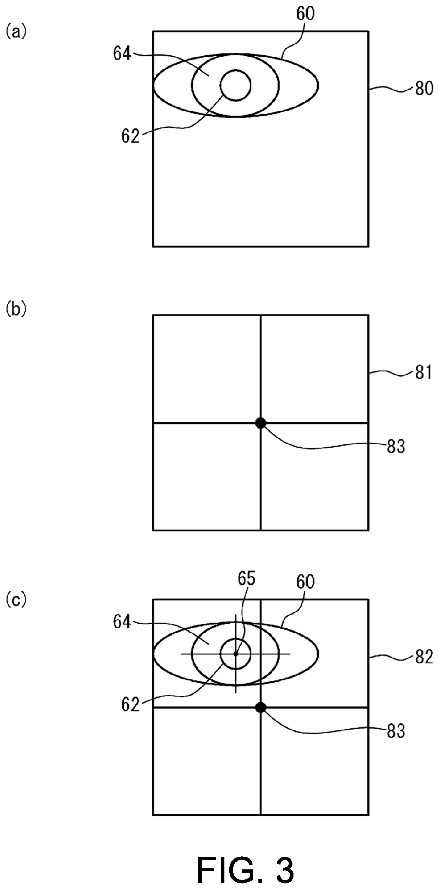

FIG. 3(a) to FIG. 3(c) are diagrams showing the captured image 80, the reference image 81, and the superimposed image 82 in Example 1. As shown in FIG. 3(a), the captured image 80 obtained by the imaging unit 40 includes at least the pupil 62 and iris 64 of the eye 60 of the user. As shown in FIG. 3(b), the reference image 81 stored in the storage unit 42 displays an initial position 83 to be aligned with the center position of the pupil 62. Straight lines respectively extending in the horizontal direction and the vertical direction through the initial position 83 may be displayed. The superimposed image 82 obtained by superimposing the captured image 80 and the reference image 81 is as shown in FIG. 3(c). In the superimposed image 82, the center position 65 of the pupil 62 and straight lines respectively extending in the horizontal direction and the vertical direction through the center position 65 may be displayed. The center position 65 of the pupil 62 may be identified by, for example, performing image analysis on the captured image 80 or the superimposed image 82 to identify the range of the black part of the eye and identifying the center portion of the identified range as the center position 65 of the pupil 62, or may be identified by other methods.

As shown in FIG. 1, the drive unit 41 is, for example, a two-axis actuator, and moves the reflection mirror 21 based on instructions from the position control unit 32. The reflection mirror 21 is a concave mirror as described above. In the case where the reflection mirror 21 has a vertex of the concave curved surface at substantially the center portion, the reflection mirror 21 moves to swing around the vicinity of that vertex. Among the multiple light beams 50, the light beam 50a corresponding to the center of the projected image projected onto the retina 61 is incident on the swing center of the reflection mirror 21 even in the case where the reflection mirror 21 moves.

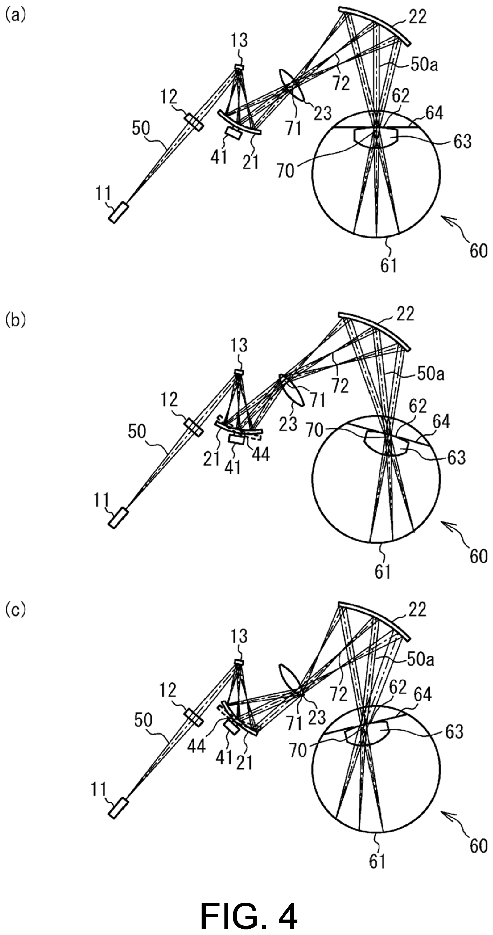

FIG. 4(a) to FIG. 4(c) are diagrams showing the light beams 50 until the light beams 50 are irradiated onto the retina 61 in Example 1. FIG. 4(b) and FIG. 4(c) show cases where the reflection mirror 21 has moved relative to FIG. 4(a).

As shown in FIG. 4(a) to FIG. 4(c), the light beam 50 emitted from the light source 11 passes through the lens 12. The lens 12 is a focusing lens that converts the light beam 50 from diffused light to focused light. The light beam 50 that has passed through the lens 12 is incident on the scanning unit 13 in the state of focused light. The lens 12 is provided between the light source 11 and the scanning unit 13 in order to turn the light beam 50 reflected by the reflection mirror 21 into substantially parallel light. Multiple light beams 50 with which the scanning unit 13 scans in two-dimensional directions and which are emitted from the scanning unit 13 in different directions at different times are incident on the reflection mirror 21. Each of the multiple light beams 50 converges in front of the reflection mirror 21 and then becomes diffused light to be incident on the reflection mirror 21. Since the reflection mirror 21 has positive focusing power, each of the multiple light beams 50 is reflected by the reflection mirror 21 to be converted from diffused light to substantially parallel light.

The multiple light beams 50 reflected by the reflection mirror 21 converge at the convergent point 71 in front of the projection mirror 22. The lens 23 is provided at the convergent point 71. The lens 23 is a focusing lens that converts each of the multiple light beams 50 from substantially parallel light to focused light. The lens 23 is provided at the convergent point 71 in order to turn each of the multiple light beams 50 reflected by the projection mirror 22 into substantially parallel light. Each of the multiple light beams 50 that has passed through the lens 23 converges at a focal point 72 in front of the projection mirror 22 and then becomes diffused light to be incident on the projection mirror 22. Since the projection mirror 22 has positive focusing power, each of the multiple light beams 50 is reflected by the projection mirror 22 to be converted from diffused light to substantially parallel light. The multiple light beams 50 converge at the convergent point 70 within the eye 60 of the user. The convergent point 70 is located, for example, at the crystalline lens 63 or near the crystalline lens 63. The light beams 50 are converted from substantially parallel light to focused light by the crystalline lens 63 and focus in the vicinity of the retina 61. This allows the user to visually recognize an image.

As shown in FIG. 4(a), in the case where the light beam 50a corresponding to the center of the projected image projected onto the retina 61 is incident on the eye 60 from substantially the front, the convergent point 71 where the multiple light beams 50 reflected by the reflection mirror 21 converge is in the vicinity of the center of the lens 23.

As shown in FIG. 4(b), in the case where the user tries to look at the right side of the image and directs the line of sight toward the right direction, the pupil 62 is in a state of moving to the right direction relative to the face of the user. In this case, the position control unit 32 gives an instruction to the drive unit 41 to move the reflection mirror 21 so that the multiple light beams 50 pass through the left side region of the lens 23 with respect to the traveling direction of the light beams 50. Thereby, the convergent point 71 where the multiple light beams 50 converge is positioned in the left side region of the lens 23 with respect to the traveling direction of the light beams 50. The multiple light beams 50 pass through the left side region of the lens 23 with respect to the traveling direction of the light beams 50 to be refracted to the right side of the traveling direction by the lens 23, and thereafter are incident on the projection mirror 22. The multiple light beams 50 are refracted to the right side of the traveling direction by the lens 23, whereby the position and incident angle at which the multiple light beams 50 are incident on the projection mirror 22 change from the state of FIG. 4(a). Thereby, the position of the convergent point 70 of the multiple light beams 50 moves to the right side, and even in the case where the pupil 62 moves to the right direction, the multiple light beams 50 are still incident on the pupil 62.

As shown in FIG. 4(c), in the case where the user tries to look at the left side of the image and directs the line of sight toward the left direction, the pupil 62 is in a state of moving to the left direction relative to the face of the user. In this case, the position control unit 32 gives an instruction to the drive unit 41 to move the reflection mirror 21 so that the multiple light beams 50 pass through the right side region of the lens 23 with respect to the traveling direction of the light beams 50. Thereby, the convergent point 71 where the multiple light beams 50 converge is positioned in the right side region of the lens 23 with respect to the traveling direction of the light beams 50. The multiple light beams 50 pass through the right side region of the lens 23 with respect to the traveling direction of the light beams 50 to be refracted to the left side of the traveling direction by the lens 23, and thereafter are incident on the projection mirror 22. The multiple light beams 50 are refracted to the left side of the traveling direction by the lens 23, whereby the position and incident angle at which the light beams 50 are incident on the projection mirror 22 change from the state of FIG. 4(a). Thereby, the position of the convergent point 70 of the multiple light beams 50 moves to the left side, and even in the case where the pupil 62 moves to the left direction, the multiple light beams 50 are still incident on the pupil 62.

FIG. 4(b) and FIG. 4(c) show examples in which the pupil 62 moves in the left-right direction, but the same applies to cases where the pupil 62 moves in other directions such as the up-down direction. By using the drive unit 41 to move the reflection mirror 21 in this way, the position of the convergent point 70 can be moved, which enables the light beam 50 to be incident on the pupil 62 even in the case where the line-of-sight direction of the eye 60 moves. Based on this, by identifying the position of the pupil 62 from the captured image 80 obtained by the imaging unit 40 and moving the reflection mirror 21 to position the convergent point 70 at the identified position of the pupil 62, it is possible to continuously make the multiple light beams 50 incident on the pupil 62. To achieve this, control information that associates multiple points within the captured image 80 obtained by the imaging unit 40 with control values for driving the drive unit 41 to position the convergent point 70 at these multiple points is acquired in advance. Then, the position control unit 32 identifies the position of the pupil 62 captured in the captured image 80 obtained by the imaging unit 40, and controls the drive unit 41 based on the identified position of the pupil 62 and the control information to move the reflection mirror 21, thereby positioning the convergent point 70 at the pupil 62. The control information is stored in advance in, for example, the storage unit 42.

Table 1 is an example of the control information stored in the storage unit 42. Table 1 is an example that the horizontal field of view angle of the image projected on the retina 61 is 28° and the vertical field of view angle is 14°. As shown in Table 1, the control information associates multiple points within the captured image 80 obtained by the imaging unit 40 with current values (control values) for positioning the convergent point 70 at these multiple points. Here, the multiple points are defined by horizontal direction angles and vertical direction angles. Since the drive unit 41 for moving the reflection mirror 21 is, for example, a two-axis actuator, in the case where the normal direction at the vertex of the concave curved surface of the reflection mirror 21 is the roll axis, the horizontal direction of the reflection mirror 21 is the pitch axis, and the vertical direction is the yaw axis, the current value for yaw rotation (numerical value on the left side in Table 1) and the current value for pitch rotation (numerical value on the right side in Table 1) are described. For example, to position the convergent point 70 at a point defined by horizontal direction angle and vertical direction angle of (10.5°, 3.5°), the reflection mirror 21 may be moved by driving the drive unit 41 with current values of (36.44 mA, 9.75 mA).

**[Table 1]**

| | | Horizontal direction | | | | | | | | | |
|---|---|---|---|---|---|---|---|---|---|---|---|
| | | -14.0° | | -10.5° | | -7.0° | | -3.5° | | 0.0° | |
| Vertical direction | 7.0° | -32.63 | 17.80 | -19.49 | 17.80 | -11.86 | 17.80 | -3.39 | 17.80 | 3.39 | 17.80 |
| | 3.5° | -32.63 | 9.75 | -19.49 | 9.75 | -11.86 | 9.75 | -3.39 | 9.75 | 3.39 | 9.75 |
| | 0.0° | -32.63 | 0.85 | -19.49 | 0.85 | -11.86 | 0.85 | -3.39 | 0.85 | 3.39 | 0.85 |
| | -3.5° | -32.63 | -7.63 | -19.49 | -7.63 | -11.86 | -7.63 | -3.39 | -7.63 | 3.39 | -7.63 |
| | -7.0° | -32.63 | -16.53 | -19.49 | -16.53 | -11.86 | -16.53 | -3.39 | -16.53 | 3.39 | -16.53 |

| | | Horizontal direction | | | | | | | | | |
|---|---|---|---|---|---|---|---|---|---|---|---|
| | | 3.5° | | 7.0° | | 10.5° | | 14.0° | | | |
| Vertical direction | 7.0° | 13.14 | 17.80 | 21.19 | 17.80 | 36.44 | 17.80 | 52.97 | 17.80 | | |
| | 3.5° | 13.14 | 9.75 | 21.19 | 9.75 | 36.44 | 9.75 | 52.97 | 9.75 | | |
| | 0.0° | 13.14 | 0.85 | 21.19 | 0.85 | 36.44 | 0.85 | 52.97 | 0.85 | | |
| | -3.5° | 13.14 | -7.63 | 21.19 | -7.63 | 36.44 | -7.63 | 52.97 | -7.63 | | |
| | -7.0° | 13.14 | -16.53 | 21.19 | -16.53 | 36.44 | -16.53 | 52.97 | -16.53 | | |

| | | | | | | | | | | | |
|---|---|---|---|---|---|---|---|---|---|---|---|
| (mA) | | | | | | | | | | | |

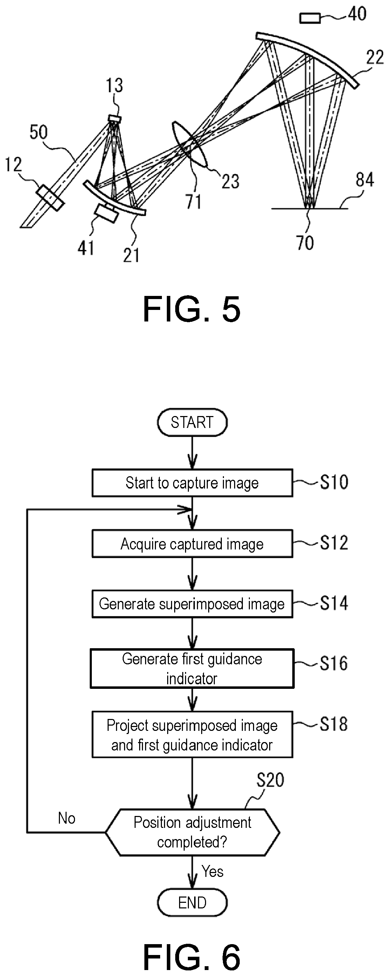

A method of acquiring the reference image 81 shown in FIG. 3(b) will be described as an example here. FIG. 5 is a diagram showing an example of the method of acquiring the reference image 81 in Example 1. As shown in FIG. 5, the image projection device 100 is prepared, and the light source 11 is driven to emit light beams 50 from the image projection device 100 to the outside. At this time, the reflection mirror 21 is at the initial position with the drive unit 41 being driven or not driven. The light beams 50 emitted from the image projection device 100 converge at the convergent point 70. A screen 84 has been disposed at the convergent point 70. The light beams 50 irradiated on the screen 84 are captured by the imaging unit 40. The image captured by the imaging unit 40 becomes the reference image 81 shown in FIG. 3(b), and the position of the convergent point 70 of the light beams 50 in the case where the reflection mirror 21 is at the initial position becomes the initial position 83.

Accordingly, when the user wears the eyeglass-type frame 90 (image projection device 100), the center position 65 of the pupil 62 can be aligned with the position of the convergent point 70 where the light beams 50 converge by aligning the center position 65 of the pupil 62 captured in the captured image 80 with the initial position 83 displayed in the reference image 81. Therefore, by moving the reflection mirror 21 using control information as shown in Table 1, it is possible to continuously make the light beams 50 incident on the pupil 62 even in the case where the line-of-sight direction of the eye 60 moves.

### [Control Method]

FIG. 6 is a flowchart showing an example of control of the control unit 30 in Example 1. As shown in FIG. 6, in response to the eyeglass-type frame 90 (image projection device 100) being worn on the face of the user, the imaging control unit 33 controls the imaging unit 40 to start to capture an image of the eye 60 of the user (step S10). For example, in response to an imaging start instruction being input from the user wearing the eyeglass-type frame 90, the imaging control unit 33 controls the imaging unit 40 to start to capture an image of the eye 60 of the user.

Next, the generation unit 34 acquires the captured image 80 of the eye 60 of the user from the imaging unit 40 (step S12). For example, the generation unit 34 acquires the captured image 80 as shown in FIG. 3(a). Next, the generation unit 34 generates the superimposed image 82 obtained by superimposing the acquired captured image 80 and the reference image 81 indicating the initial position 83 stored in the storage unit 42 (step S14). For example, the generation unit 34 superimposes the captured image 80 as shown in FIG. 3(a) and the reference image 81 as shown in FIG. 3(b) to generate the superimposed image 82 as shown in FIG. 3(c).

Additionally, the generation unit 34 generates the first guidance indicator that guides the center position 65 of the pupil 62 and the initial position 83 to match each other, based on the center position 65 of the pupil 62 captured in the captured image 80 and the initial position 83 in the reference image 81 (step S16). For example, the generation unit 34 generates, as the first guidance indicator, an arrow indicating the direction to move in order to align the center position 65 of the pupil 62 and the initial position 83, based on the center position 65 of the pupil 62 and the initial position 83.

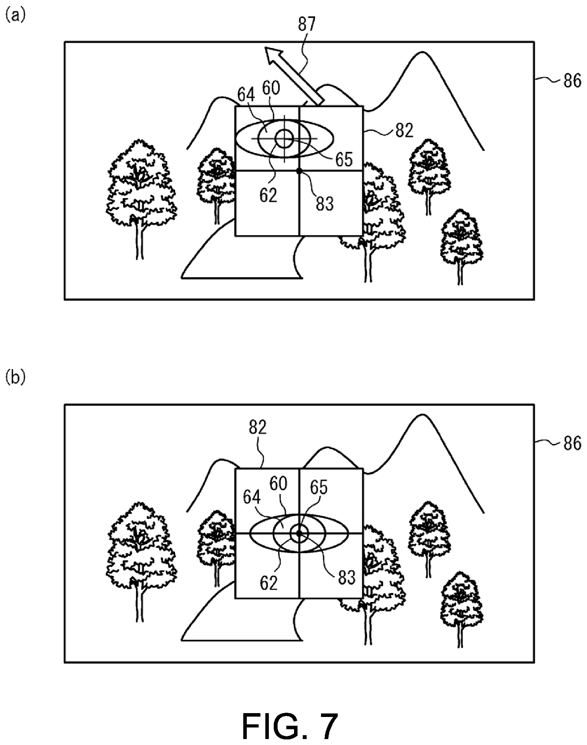

Next, the projection control unit 31 controls the light source 11 and the scanning unit 13 to project the superimposed image 82 and the first guidance indicator generated by the generation unit 34 onto the retina 61 of the user (step S18). FIG. 7(a) and FIG. 7(b) are diagrams showing an example of the projected image 86 in Example 1. As shown in FIG. 7(a), the projected image 86 including the superimposed image 82 and the first guidance indicator 87, which is an arrow, for example, is projected onto the retina 61. The projected image 86 may include an image based on image data input from, for example, a camera and/or recording equipment (for example, mountains, rivers, and forests in FIG. 7(a) and FIG. 7(b)). Projecting the projected image 86 including the superimposed image 82 and the first guidance indicator 87 allows the user to visually grasp the deviation between the position of the pupil 62 of the user and the initial position 83. Therefore, for example, the user can adjust the adjustment unit 92 (see FIG. 2) that moves the position of the projection unit 10, the position of the nose pad of the eyeglass-type frame 90 or the like so that the center position 65 of the pupil 62 and the initial position 83 align with each other. FIG. 7(b) shows an example of the superimposed image 82 after alignment.

Returning to FIG. 6, the generation unit 34 determines whether position adjustment for adjusting the center position 65 of the pupil 62 and the initial position 83 to align has been completed (step S20), and in the case where position adjustment has not been completed (No), returns to step S12, and in the case where position adjustment has been completed (Yes), ends this process. Whether position adjustment has been completed may be determined, for example, based on whether an instruction indicating completion has been input from the user, or may be determined based on whether the deviation amount between the center position 65 of the pupil 62 and the initial position 83 has become equal to or less than a predetermined value.

According to Example 1, as shown in FIG. 3(a) to FIG. 3(c), the generation unit 34 generates the superimposed image 82 by superimposing the captured image 80 of the eye 60 of the user obtained by the imaging unit 40 and the reference image 81 displaying the initial position 83 to be aligned with the pupil 62 of the user. The projection control unit 31 controls the projection unit 10 to project the superimposed image 82 generated by the generation unit 34 onto the retina 61 of the user. This allows the user to visually grasp the positional relationship between the position of the pupil 62 of the user and the initial position 83 to be aligned with the pupil 62. Therefore, the user can perform position adjustment between the position of the pupil 62 and the initial position 83 while viewing the superimposed image 82, so it is possible to perform alignment easily.

Further, in Example 1, as shown in FIG. 7(a), the generation unit 34 generates the first guidance indicator 87 that guides the center position 65 of the pupil 62 and the initial position 83 to match each other, based on the center position 65 of the pupil 62 captured in the captured image 80 and the initial position 83 in the reference image 81. The projection control unit 31 projects the first guidance indicator 87 onto the retina 61. This allows the user to visually grasp the direction to adjust in order to align the center position 65 of the pupil 62 and the initial position 83, so it is possible to perform alignment easily.

Although Example 1 illustrates a case where the first guidance indicator 87 is an arrow as an example, the first guidance indicator 87 may be an indicator other than arrow as long as it is possible to guide the center position 65 of the pupil 62 and the initial position 83 to match each other.

### Example 2

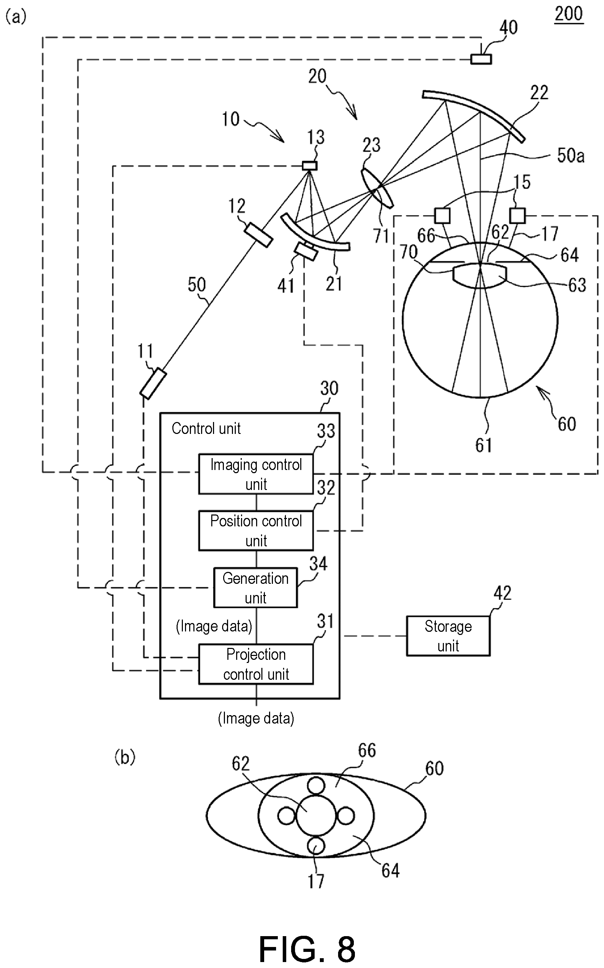

FIG. 8(a) is a diagram showing an image projection device 200 according to Example 2, and FIG. 8(b) is a diagram showing irradiation of an illumination light 17 emitted from an illumination light source 15 onto a cornea 66. As shown in FIG. 8(a), the image projection device 200 according to Example 2 includes multiple illumination light sources 15 in front of the eye 60 of the user. The illumination light sources 15 are built into the housing 91 in FIG. 2 together with the projection unit 10 and the imaging unit 40, and are attached to the eyeglass-type frame 90. The illumination light source 15 is, for example, an infrared LED (Light Emitting Diode), and emits the illumination light 17 that is infrared light based on instructions from the imaging control unit 33. At least four illumination light sources 15 are provided to respectively face the pupil 62 in the up-down direction and the left-right direction. Therefore, as shown in FIG. 8(b), four illumination lights 17 directed toward the pupil 62 in the up-down direction and the left-right direction are irradiated onto the cornea 66 of the user. Other configurations are the same as in Example 1, so descriptions thereof are omitted.

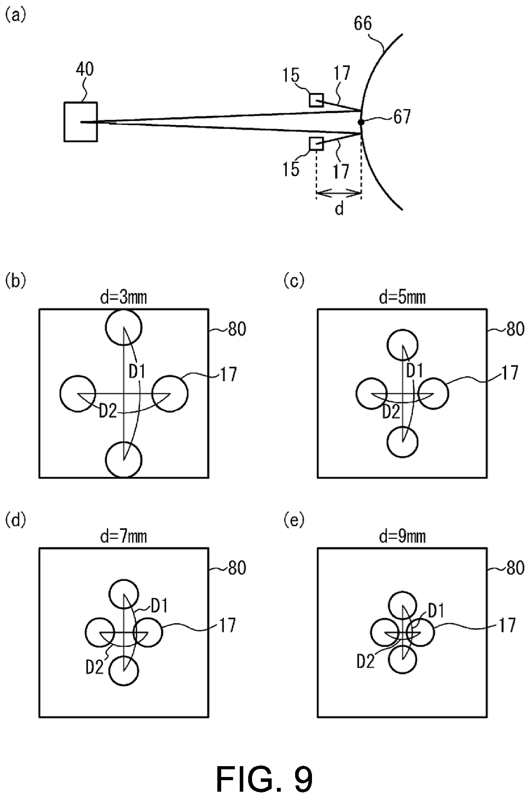

FIG. 9(a) to FIG. 9(e) are diagrams showing the relationship between the interval d between the illumination light sources 15 and the cornea 66 in Example 2, and the illumination light 17 captured in the captured image 80 obtained by the imaging unit 40. As shown in FIG. 9(a), the interval from the multiple illumination light sources 15 to a vertex 67 of the cornea 66 is defined as d. Since the illumination light sources 15 emit the illumination lights 17 in an oblique direction that is tilted toward the vertex 67 side of the cornea 66, as shown in FIG. 9(b) to FIG. 9(e), the interval D1 and the interval D2 between the illumination lights 17 captured in the captured image 80 change according to the interval d from the illumination light sources 15 to the vertex 67 of the cornea 66. FIG. 9(b) shows an example in which the interval d is 3 mm, FIG. 9(c) shows an example in which the interval d is 5 mm, FIG. 9(d) shows an example in which the interval d is 7 mm, and FIG. 9(e) shows an example in which the interval d is 9 mm. As the interval d increases, the intervals D1 and D2 decrease. The interval D1 is the distance between the centers of two illumination lights 17 that oppose the pupil 62 in the up-down direction. The interval D2 is the distance between the centers of two illumination lights 17 that oppose the pupil 62 in the left-right direction.

As shown in FIG. 8(a), it is desirable that the convergent point 70 where multiple light beams 50 emitted from the image projection device 100 converge is located at an appropriate position at the crystalline lens 63 or near the crystalline lens 63. However, when the user wears the eyeglass-type frame 90 (image projection device 100), depending on the position of the eyeglass-type frame 90 relative to the face of the user, the position of the convergent point 70 may deviate from the appropriate position in the traveling direction of the light beams 50. As shown in FIG. 9(a) to FIG. 9(e), there is a correlation between the interval d and the intervals D1 and D2. Therefore, the interval d can be specified by determining the intervals D1 and D2. Since the illumination light sources 15 are built into the housing 91 together with the projection unit 10 and the imaging unit 40 and attached to the eyeglass-type frame 90, the value of the interval d in the case of the convergent point 70 being positioned at an appropriate position is specified. Accordingly, the convergent point 70 can be put at an appropriate position by adjusting the intervals D1 and D2 appropriately.

Therefore, in Example 2, the generation unit 34 detects the intervals D1 and D2 between the multiple illumination lights 17 captured in the captured image 80, and generates a second guidance indicator that guides the intervals D1 and D2 to become predetermined values. The projection control unit 31 projects the second guidance indicator generated by the generation unit 34 onto the retina 61.

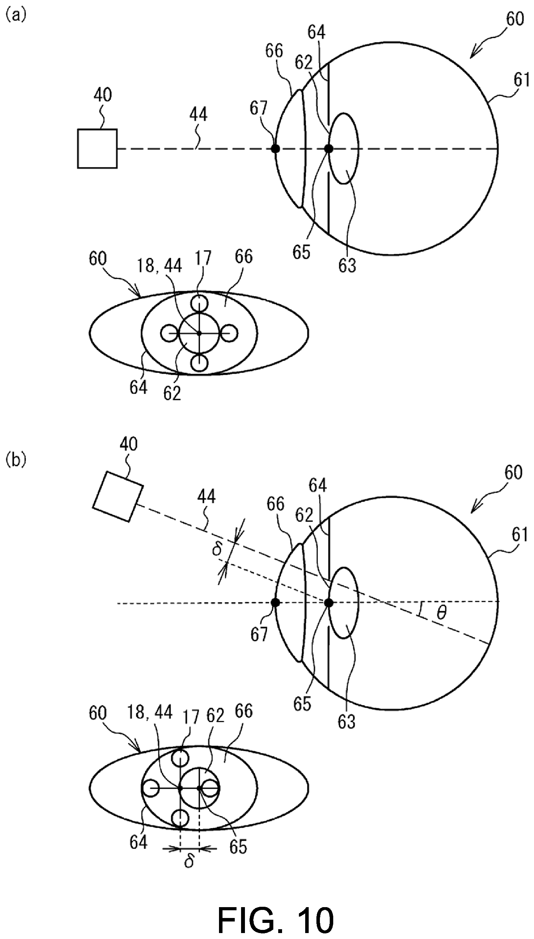

FIG. 10(a) and FIG. 10(b) are diagrams illustrating a case where the line-of-sight direction of the eye 60 is tilted with respect to the optical axis 44 of the imaging unit 40 in Example 2. The upper diagram of FIG. 10(a) and FIG. 10(b) is a cross-sectional view of the eye 60, and the lower diagram is a front view of the eye 60. As shown in the upper diagram of FIG. 10(a), in the case where there is no tilt between the optical axis 44 of the imaging unit 40 and the line-of-sight direction of the eye 60, the vertex 67 of the cornea 66 and the center position 65 of the pupil 62 are positioned on the optical axis 44 of the imaging unit 40. At this time, as shown in the lower diagram, the positions of the cornea 66 irradiated by the illumination lights 17 are such that the intersection point 18 of a straight line passing through the centers of the illumination lights 17 opposing the pupil 62 in the up-down direction and a straight line passing through the centers of the illumination lights 17 opposing the pupil 62 in the left-right direction is positioned on the optical axis 44.

As shown in the upper diagram of FIG. 10(b), when the user wears the eyeglass-type frame 90 (image projection device 100), the optical axis 44 of the imaging unit 40 and the line-of-sight direction of the eye 60 may be tilted at a tilt θ. In this case, as shown in the upper and lower diagrams, the center position 65 of the pupil 62 deviates by a deviation amount δ with respect to the optical axis 44 of the imaging unit 40. In other words, the center position 65 of the pupil 62 deviates by the deviation amount δ with respect to the intersection point 18 of straight lines passing through the centers of the multiple illumination lights 17. The tilt deviation can be suppressed by eliminating this deviation amount δ.

Therefore, in Example 2, the generation unit 34 generates the superimposed image 82 that displays the intersection point 18 of straight lines passing through the centers of the multiple illumination lights 17 captured in the captured image 80 and the center position 65 of the pupil 62 captured in the captured image 80, in order to guide the deviation amount δ to become smaller.

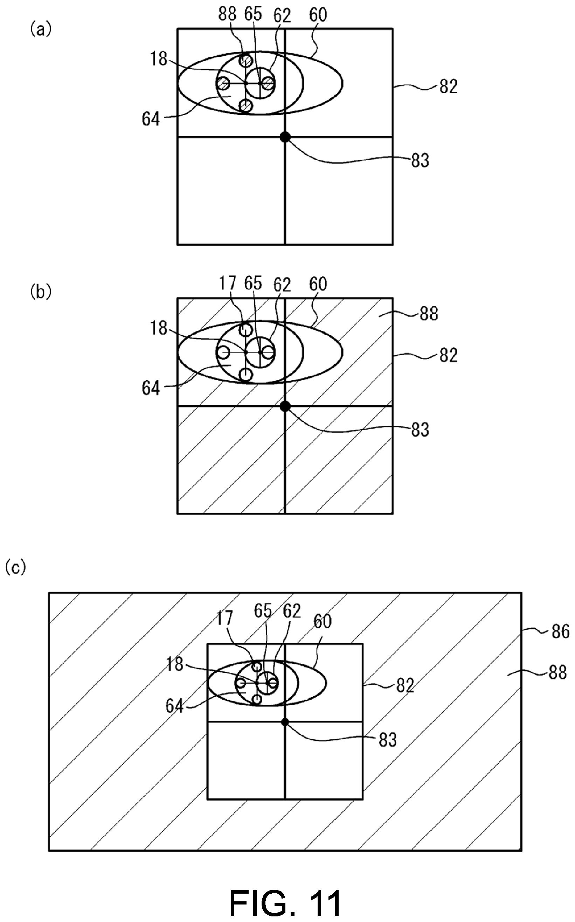

FIG. 11(a) to FIG. 11(c) are diagrams showing an example of the superimposed image 82 and the second guidance indicator 88 generated by the generation unit 34 in Example 2. As shown in FIG. 11(a), the generation unit 34 may generate a superimposed image 82 that displays a second guidance indicator 88 (hatched portion) at a location overlapping with the illumination lights 17, and the second guidance indicator 88 is a color that changes according to the deviation amount from appropriate intervals D1 and D2. As shown in FIG. 11(b), the generation unit 34 may generate a superimposed image 82 that displays a second guidance indicator 88 (hatched portion) in a region that does not overlap with the eye 60, and the second guidance indicator 88 is a color that changes according to the deviation amount from appropriate intervals D1 and D2. As shown in FIG. 11(c), the generation unit 34 may generate a second guidance indicator 88 (hatched portion) in a region other than the superimposed image 82 in the projected image 86, and the second guidance indicator 88 is a color that changes according to the deviation amount from appropriate intervals D1 and D2. For example, the second guidance indicator 88 may be red in the case of a large deviation amount, and change to orange, yellow, green, and blue as the deviation amount becomes smaller.

Further, as shown in FIG. 11(a) to FIG. 11(c), the generation unit 34 generates a superimposed image 82 that displays the intersection point 18 of straight lines passing through the centers of the multiple illumination lights 17 captured in the captured image 80 and the center position 65 of the pupil 62 captured in the captured image 80.

### [Control Method]

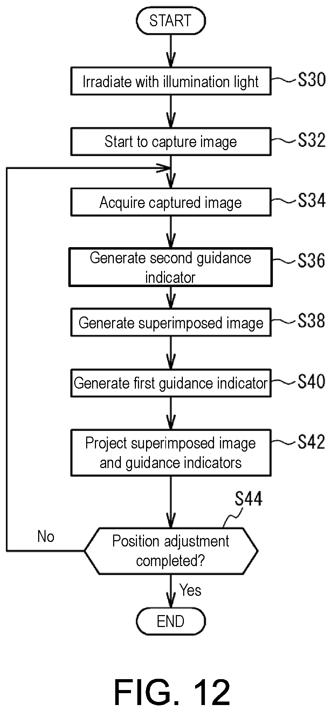

FIG. 12 is a flowchart showing an example of control of the control unit 30 in Example 2. As shown in FIG. 12, in response to the eyeglass-type frame 90 (image projection device 100) being worn on the face of the user, the imaging control unit 33 controls the illumination light sources 15 to irradiate the eye 60 of the user with the illumination lights 17 (step S30). For example, the imaging control unit 33 controls the illumination light sources 15 to irradiate the eye 60 of the user with the illumination lights 17 in response to an instruction to irradiate the illumination lights 17 being input from the user wearing the eyeglass-type frame 90. Next, the imaging control unit 33 controls the imaging unit 40 to start to capture an image of the eye 60 of the user (step S32).

Next, the generation unit 34 acquires the captured image 80 of the eye 60 of the user from the imaging unit 40 (step S34). Then, the generation unit 34 detects the intervals D1 and D2 between the illumination lights 17 captured in the captured image 80, and generates the second guidance indicator 88 that guides the intervals D1 and D2 to become predetermined values according to the detection results (step S36). For example, the generation unit 34 generates the second guidance indicator 88 to be displayed within the superimposed image 82 or the second guidance indicator 88 to be displayed in a region other than the superimposed image 82 in the projected image 86, as shown in FIG. 11(a) to FIG. 11(c).

Next, the generation unit 34 superimposes the captured image 80 and the reference image 81 showing the initial position 83, and generates the superimposed image 82 that displays the intersection point 18 of straight lines passing through the centers of the multiple illumination lights 17 captured in the captured image 80 and the center position 65 of the pupil 62 captured in the captured image 80 (step S38). For example, the generation unit 34 generates the superimposed image 82 displaying the intersection point 18 and the center position 65, as shown in FIG. 11(a) to FIG. 11(c).

Further, the generation unit 34 generates the first guidance indicator 87 that guides the center position 65 of the pupil 62 and the initial position 83 to match each other, based on the center position 65 of the pupil 62 captured in the captured image 80 and the initial position 83 in the reference image 81 (step S40).

Next, the projection control unit 31 controls the light source 11 and the scanning unit 13 to project the superimposed image 82, the first guidance indicator 87, and the second guidance indicator 88 generated by the generation unit 34 onto the retina 61 of the user (step S42). Similar to Example 1, this allows the user to visually grasp the deviation between the position of the pupil 62 of the user and the initial position 83 through the superimposed image 82, and perform position adjustment to align the position of the pupil 62 with the initial position 83 while referring to the first guidance indicator 87 (see FIG. 7(a)). Further, the user can adjust the position of the convergent point 70 where the multiple light beams 50 converge to an appropriate position using the second guidance indicator 88. Furthermore, by displaying the intersection point 18 of straight lines passing through the centers of the multiple illumination lights 17 and the center position 65 of the pupil 62, the user can adjust the tilt deviation between the optical axis 44 of the imaging unit 40 and the line-of-sight direction of the eye 60. For example, the user can perform the various adjustments described above by adjusting the adjustment unit 92 (see FIG. 2) that moves the position of the projection unit 10, the position of the nose pad of the eyeglass-type frame 90 or the like.

Next, the generation unit 34 determines whether the position adjustment using the superimposed image 82 has been completed (step S44), and in the case where the position adjustment has not been completed (No), returns to step S34, and in the case where the position adjustment has been completed (Yes), ends this process. Whether the position adjustment has been completed may be determined, for example, based on whether an instruction indicating completion has been input from the user, or may be determined by other methods.

As shown in FIG. 8(a), Example 2 includes the illumination light source 15 that is built into the housing 91 together with the projection unit 10 and the imaging unit 40 to be attached to the eyeglass-type frame 90 and irradiates the eye 60 of the user with multiple illumination lights 17. As shown in FIG. 9(a) to FIG. 9(e) and FIG. 11(a) to FIG. 11(c), the generation unit 34 generates the second guidance indicator 88 that guides the intervals D1 and D2 between the multiple illumination lights 17 captured in the captured image 80 to become predetermined values, and the projection control unit 31 controls the projection unit 10 to project the second guidance indicator 88 onto the retina 61. This allows the user to adjust the intervals D1 and D2 between the multiple illumination lights 17 to appropriate sizes based on the second guidance indicator 88, and as a result, to align the convergent point 70 with an appropriate position.

Further, in Example 2, as shown in FIG. 8(b), the illumination light sources 15 irradiate the eye 60 of the user with four illumination lights 17 that respectively oppose in the up-down direction (first direction) and the left-right direction (second direction). The generation unit 34 generates the second guidance indicator 88 that guides the interval D1 between two illumination lights 17 opposing in the up-down direction and the interval D2 between two illumination lights 17 opposing in the left-right direction to become predetermined values, as shown in FIG. 9(b) to FIG. 9(e). The convergent point 70 can be adjusted to an appropriate position by adjusting such intervals D1 and D2 to appropriate sizes.

Although Example 2 illustrates a case where the second guidance indicator 88 is a color that changes according to the intervals D1 and D2 between the multiple illumination lights 17 as an example, the second guidance indicator 88 may be an indicator other than color as long as it is possible to guide the intervals D1 and D2 to become predetermined values.

Further, according to Example 2, as shown in FIG. 11(a) to FIG. 11(c), the generation unit 34 generates the superimposed image 82 that displays the intersection point 18, which is a position based on the multiple illumination lights 17 captured in the captured image 80, and the center position 65 of the pupil 62 captured in the captured image 80. This allows the user to perform position adjustment to align the intersection point 18 and the center position 65 of the pupil 62, which as a result, can reduce the tilt deviation between the optical axis 44 of the imaging unit 40 and the line-of-sight direction of the eye 60.

Additionally, in Example 2, the generation unit 34 sets the intersection point 18, where the straight line passing through the centers of the two illumination lights 17 opposing in the up-down direction and the straight line passing through the centers of the two illumination lights 17 opposing in the left-right direction intersect, as a position based on the multiple illumination lights 17, as shown in FIG. 10(a) and FIG. 10(b). By displaying such an intersection point 18 in the superimposed image 82 and performing position adjustment to align the intersection point 18 and the center position 65 of the pupil 62, the tilt deviation between the optical axis 44 of the imaging unit 40 and the line-of-sight direction of the eye 60 can be reduced.

In Example 1 and Example 2, the reflection mirror 21 and the projection mirror 22 are not limited to concave mirrors, and may be other optical components such as combinations of lenses and mirrors or use of diffractive elements in addition to curved mirrors as long as the optical components have positive focusing power. The lens 23 is not limited to a convex lens, and may be other optical members such as mirrors or diffractive elements as long as it is possible to make the light beam 50 incident on the projection mirror 22 as diffused light. The lens 23 may have a function to suppress chromatic aberration.

Although Example 1 and Example 2 illustrate cases where the image projection device is attached to the eyeglass-type frame 90, the image projection device may also be attached to a goggle-type frame, eye patch-type frame, ear-hook type frame, or helmet-mounted type frame.

The examples of the present invention have been described in detail above, but the present invention is not limited to such specific examples, and it is possible to make various modifications and changes within the scope of the gist of the present invention defined in the claims.

## Claims

1. An image projection device, comprising:
a projection unit comprising a scanning unit that scans with a light beam emitted from a light source, and a projection optical system that converges a plurality of the light beams emitted in different directions from the scanning unit by scanning of the scanning unit to a convergent point within an eye of a user and then projects converged light beams onto a retina to project an image onto the retina;
an imaging unit capturing an image of the eye of the user;
a generation unit generating a superimposed image obtained by superimposing a captured image of the eye of the user obtained by the imaging unit and a reference image displaying a position to be aligned with a pupil of the user; and
a projection control unit controlling the projection unit to project the superimposed image onto the retina.

2. The image projection device according to claim 1, wherein the generation unit generates a first guidance indicator that guides a center position of the pupil of the user and the position to match each other, based on the center position of the pupil of the user captured in the captured image and the position in the reference image, and
the projection control unit controls the projection unit to project the first guidance indicator onto the retina.

3. The image projection device according to claim 2, wherein the first guidance indicator is an arrow.

4. The image projection device according to claim 1 or 2, wherein the projection unit and the imaging unit are attached to a frame worn by the user.

5. The image projection device according to claim 1, comprising an illumination light source that is attached to a frame worn by the user together with the projection unit and the imaging unit, and irradiates a plurality of illumination lights to the eye of the user,
wherein the generation unit generates a second guidance indicator that guides an interval between the plurality of illumination lights captured in the captured image to become a predetermined value, and
the projection control unit controls the projection unit to project the second guidance indicator onto the retina.

6. The image projection device according to claim 5, wherein the second guidance indicator is a color that changes according to the interval between the plurality of illumination lights.

7. The image projection device according to claim 5 or 6, wherein the illumination light source irradiates the eye of the user with four illumination lights that respectively oppose each other in at least a first direction and a second direction orthogonal to the first direction as the plurality of illumination lights, and
the generation unit generates the second guidance indicator that guides an interval between two illumination lights opposing each other in the first direction and an interval between two illumination lights opposing each other in the second direction to become the predetermined value.

8. The image projection device according to claim 1, comprising an illumination light source that is attached to a frame worn by the user together with the projection unit and the imaging unit, and irradiates a plurality of illumination lights to the eye of the user,
wherein the generation unit generates the superimposed image that displays a position based on the plurality of illumination lights captured in the captured image and a center position of the pupil captured in the captured image.

9. The image projection device according to claim 8, wherein the illumination light source irradiates the eye of the user with four illumination lights that respectively oppose each other in at least a first direction and a second direction orthogonal to the first direction as the plurality of illumination lights, and
the generation unit sets an intersection point where a straight line passing through centers of two illumination lights opposing each other in the first direction and a straight line passing through centers of two illumination lights opposing each other in the second direction intersect, as a position based on the plurality of illumination lights.
